# EUROPÄISCHE PATENTSCHRIFT

(11) **EP 3 375 345 B1**
(45) Veröffentlichungstag und Bekanntmachung des Hinweises auf die Patenterteilung: **26.02.2020**
(21) Anmeldenummer: 18160107.1
(22) Anmeldetag: 06.03.2018
(51) Int. Cl.: A47L 15/42, A47L 15/48

(54) **GESCHIRRSPÜLMASCHINE, INSBESONDERE HAUSHALTSGESCHIRRSPÜLMASCHINE**
DISHWASHER, IN PARTICULAR DOMESTIC DISHWASHER
LAVE-VAISSELLE, EN PARTICULIER LAVE-VAISSELLE ÉLECTROMÉNAGER

(30) Priorität: 14.03.2017 DE 102017105385
(43) Veröffentlichungstag der Anmeldung: 19.09.2018
(73) Patentinhaber: Miele & Cie. KG, 33332 Gütersloh (DE)
(72) Erfinder: Bertram, Andre, 33609 Bielefeld (DE); Dahms, Tobias, 30519 Hannover (DE); Wolf, Cornelius, 33739 Bielefeld (DE); Steinmeier, Ralph, 32052 Herford (DE); Nierling, Andreas, 49326 Melle (DE)

(56) Entgegenhaltungen:
- WO-A1-2014/174784
- WO-A2-2012/089569
- DE-A1-102010 002 086

## Beschreibung

Die Erfindung betrifft eine Geschirrspülmaschine, insbesondere eine Haushaltsgeschirrspülmaschine, mit einem einen Spülraum bereitstellenden Spülbehälter, der der Aufnahme von zu reinigendem Spülgut dient, und einer Wärmepumpeneinrichtung, die einen Verdampfer aufweist, der innerhalb eines mit Wasser befüllten Tanks angeordnet ist. Ferner betrifft die Erfindung ein Verfahren zum Betrieb einer Geschirrspülmaschine.

Geschirrspülmaschinen der eingangs genannten Art sind aus dem Stand der Technik an sich wohl bekannt. Eines gesonderten druckschriftlichen Nachweises bedarf es an dieser Stelle deshalb nicht.

Vorbekannte Geschirrspülmaschinen verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sog. Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Geschirrspülmaschinen der eingangs genannten Art können bekanntermaßen mit einer Wärmepumpeneinrichtung ausgestattet sein, um den Energieverbrauch insbesondere bei einem Aufheizen der Spülflotte zu reduzieren, insbesondere deshalb, weil ein solches Aufheizen der Spülflotte den größten Teil am Energieverbrauch einer Geschirrspülmaschine ausmacht.

Aus der EP 2 682 038 A2 ist eine Geschirrspülmaschine mit einer Luft-Wasser-Wärmepumpeneinrichtung bekannt. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpeneinrichtung verfügt zu diesem Zweck in an sich bekannter Weise über einen Verdampfer, einen Verdichter, einen Verflüssiger und einen diese Komponenten miteinander strömungstechnisch verbindenden Strömungs-oder Umwälzkreislauf. Dabei dient der Verflüssiger als Wärmetauscher, mittels dem Wärmeenergie von einem im Strömungskreislauf der Wärmepumpeneinrichtung umgewälzten Arbeitsmedium auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Arbeitsmedium übertragen wird, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Spülflottenaufheizung.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpeneinrichtung beherbergt. Im Betriebsfall kommt es infolge eines Wärmeenergieentzugs zu einer Abkühlung des im Tank bevorrateten Wassers. Dabei kann eine Abkühlung des Wassers bis zur Vereisung vorgenommen werden.

Den vorbekannten Konstruktionen ist gemein, dass die zur Aufheizung der Spülflotte mittels der Wärmepumpeneinrichtung übertragene Wärmeenergie schlussendlich der Umgebungsluft entstammt, so auch bei einer Wasser-Wasser-Wärmepumpeneinrichtung, wenn auch indirekt. Denn ein Aufwärmen, ggfs. sogar Auftauen des im geschlossenen Tank der Wasser-Wasser-Wärmepumpeneinrichtung befindlichen Wassers erfolgt durch Wärmeentzug aus der Umgebungsluft. Dies führt in nachteiliger Weise zu einer Abkühlung der Umgebungsluft, was verwenderseitig als nachteilig empfunden wird.

Bei einer Wasser-Wasser-Wärmepumpeneinrichtung kommt in nachteiliger Weise hinzu, dass ein bestimmungsgemäßer Einsatz der Geschirrspülmaschine unter gleichzeitiger Nutzung der Wärmepumpeneinrichtung energetisch nur dann sinnvoll ist, wenn das im Tank bevorratete Wasser eine gewisse Mindesttemperatur aufweist. Sollte dieses nach einer vorangegangenen Geschirrspülmaschinenbenutzung noch zu kühl oder sogar gefroren sein, muss mit einem bestimmungsgemäßen Einsatz der Geschirrspülmaschine bis zum Erreichen der Mindesttemperatur gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich. Auch dies wird verwenderseitig als nachteilig empfunden.

Die WO2012/089569 A2 offenbart eine Geschirrspülmaschine mit einer Wärmepumpeneinrichtung, die einen Verdampfer aufweist, der innerhalb eines geschlossenen, mit Wasser befüllten Tanks angeordnet ist. Während einer Trocknungsphase wird Luft aus dem Spülraum außenseitig am Tank vorbeigeführt.

Ausgehend vom Vorbeschriebenen ist es die **Aufgabe** der Erfindung, eine Geschirrspülmaschine der eingangs genannten Art vorzuschlagen, die einen Betrieb der Wärmepumpeneinrichtung unter vermindertem Energieentzug aus der Umgebung bzw. Umgebungsluft gestattet.

Zur Lösung dieser Aufgabe wird mit der Erfindung eine Geschirrspülmaschine mit den Merkmalen von Anspruch 1 vorgeschlagen.

Der im betriebsfertigen Zustand der Geschirrspülmaschine mit Wasser befüllte Tank der Wärmepumpeneinrichtung ist in Abkehr zur Lehre nach der EP 2 206 824 A2 nicht geschlossen, sondern offen ausgebildet. So sind nämlich Luftführungskanäle vorgesehen, die den Tank strömungstechnisch mit dem vom Spülbehälter bereitgestellten Spülraum koppeln. Es sind dabei ein erster Luftführungskanal, nämlich ein Luftzuführungskanal einerseits sowie ein zweiter Luftführungskanal, nämlich ein Luftabführungskanal vorgesehen. Im Betriebsfall kann über den Luftzuführungskanal Luft aus dem Spülraum heraus in den Tank gefördert werden. Dabei gelangt die Luft in unmittelbaren Kontakt mit dem Tankinhalt, nämlich dem darin bevorrateten flüssigen oder teilweise gefrorenen bzw. eisförmigen Wasser; sie strömt also unmittelbar an der Wasser- und/oder Eisoberfläche entlang. Der Luftabführungskanal dient indes dazu, aus dem Tank stammende Luft zurück in Spülraum zu fördern. Im Ergebnis ist so ein Umluftkreislauf geschaffen, der im Betriebsfall eine Luftumwälzung gestattet, und zwar aus dem Spülraum heraus, durch den Luftzuführungskanal in den Tank und von dort aus durch den Luftabführungskanal zurück in den Spülraum.

Die erfindungsgemäß vorgesehenen Luftführungskanäle ermöglichen eine Wärmeenergieübertragung von der im Spülbehälter befindlichen Luft auf das im Tank der Wärmepumpeneinrichtung befindliche Wasser. Im Betriebsfall kann damit Wärmeenergie aus der vom Spülbehälter beherbergten Luft auf das im Tank befindliche Wasser übertragen werden, womit in Abkehr zum Stand der Technik ein Wärmeeintrag in das vom Tank bevorratete Wasser nicht mehr nur ausschließlich aus der Umgebungsluft unter Zwischenschaltung der Wände des Tanks, sondern auch direkt aus der im Spülbehälter befindlichen Luft stattfindet.

Die vorbeschriebene Konstruktion erweist sich insbesondere insofern als vorteilhaft, als dass mit Beginn einer Spülguttrocknung Trocknungsluft in dem Umluftkreislauf durch den Spülbehälter und den Tank geführt werden kann. Dabei kann die in der Trocknungsluft befindliche Wärmeenergie dazu genutzt werden, das Wasser im Tank der Wärmepumpeneinrichtung zu erwärmen beziehungsweise dort befindliches Eis aufzutauen, so dass ein baldiger Wiedereinsatz der Wärmepumpeneinrichtung gestattet ist. Im Unterschied zum Stand der Technik erfolgt also ein Wärmeeintrag in das Wasser des Tanks mithin nicht nur aus der Raumluft, sondern insbesondere auch aus der Trocknungsluft, was die Zeitdauer bis zur Erreichung der für einen ordnungsgemäßen Betrieb der Wärmepumpeneinrichtung notwendigen Mindesttemperatur des Wassers deutlich reduziert.

Die erfindungsgemäße Konstruktion erweist sich auch energetisch als vorteilhaft, da die zwecks Aufheizung der Spülflotte in die Spülflotte eingebrachte Wärmeenergie teilweise zurückgewonnen werden kann und nicht durch Abpumpen der Spülflotte verloren geht. Damit kann ein Teil der zuvor durch die Wärmepumpeneinrichtung in die Spülflotte eingebrachten Wärmeenergie für die Wärmepumpeneinrichtung zwecks Erwärmung des im Tank bevorrateten Wassers zurückgewonnen werden.

Im bestimmungsgemäßen Anwendungsfall findet eine Aufheizung der Spülflotte in an sich bekannter Weise unter Mitwirkung der Wärmepumpeneinrichtung statt. Dabei kühlt das im Tank der Wärmepumpeneinrichtung befindliche Wasser, welches typischerweise eine Masse von 3kg bis 7kg, insbesondere 4,5kg bis 6kg, aufweist, ab, friert gegebenenfalls sogar ein. Vorzugsweise liegt dabei ein sich nach dem Klarspülschritt einstellender Vereisungsgrad von 60%-90%, vorzugsweise 80% bis 90% vor, insbesondere eine Eismasse von typischerweise 3,5 kg bis 5 kg. Für einen erneuten Einsatz der Wärmepumpeneinrichtung ist das Wasser auf eine Mindesttemperatur aufzuwärmen, das heißt gegebenenfalls sogar aufzutauen. Dies geschieht erfindungsgemäß mit Hilfe einer Trocknungsluftumwälzung, die es ermöglicht, in der Trocknungsluft befindliche Wärmeenergie auf das im Tank bevorratete Wasser beziehungsweise auf das sich dort befindliche Eis zu übertragen. Die Übertragung der in der Trocknungsluft befindlichen Wärmeenergie auf das im Tank bevorratete Wasser bzw. Eis erfolgt dabei vorzugsweise direkt, d.h. ohne dazwischenliegende Wand. Die Wärmeübertragung erfolgt insbesondere durch Vorbeiströmen der Luft an der Wasseroberfläche bzw. Eisfläche und steht somit in direktem Wirkkontakt mit ihr. Anders ausgedrückt ist die durch den Inhalt des Tanks gebildete Oberfläche, die als mindestens eine Wärmeübertragungsfläche dient, durch die in den Tank eintretende Luft anströmbar ausgebildet ist, so dass Luftfeuchtigkeit an ihr unmittelbar kondensiert werden kann.

Ein Spülprogramm sieht typischerweise mehrere aufeinander nachfolgende Spülschritte vor. Der letzte Spülschritt ist in der Regel die Spülguttrocknung. Diesem Spülschritt geht zumeist das sogenannte Klarspülen voran. Dieses Klarspülen erfolgt mit aufgeheizter Spülflotte, infolgedessen es zu einem Aufheizen des Spülguts kommt. Im nachfolgenden Trocknungsschritt erfolgt typischerweise eine Trocknung durch Kondensationstrocknung, die dadurch bewerkstelligt wird, dass der Spülbehälter von außen mit Luft abgekühlt wird, infolgedessen es innenseitig des Spülbehälters zur Kondensation des im Spülbehälter befindlichen Wasserdampfs kommt, der dadurch entsteht, dass Restfeuchte aufgrund des im vorangegangenen Klarspülschritts erwärmten Spülguts verdunstet.

Die erfindungsgemäße Konstruktion ermöglicht es nun, die im Trocknungsschritt im Spülraum entstehende feuchte und warme Trocknungsluft abzusaugen und sie dem Tank mittels des Luftzuführkanals zuzuführen. Im Tank kommt es dann zu einer Abkühlung der Trocknungsluft an bzw. auf der Wasser- und/oder Eisfläche mit der Folge, dass sich das im Tank befindliche Wasser erwärmt. Infolge der Temperaturabsenkung der Trocknungsluft kommt es zudem zu Kondensationseffekten, das heißt in der Trocknungsluft befindliche Feuchtigkeit fällt in Form von Wasser aus, welches sich im Tank ansammelt. Die insofern abgekühlte und entfeuchtete Trocknungsluft wird in den Spülraum zurückgeführt, wofür der Luftabführungskanal dient.

Im Umwälzbetrieb wird die Trocknungsluft weiter umgeführt, zumindest solange, bis die Trocknungsluft soweit abgekühlt ist, dass kein weiterer zumindest nennenswerter Wärmeübergang von der Trocknungsluft auf das im Tank befindliche Wasser stattfindet.

Die während eines Trocknungsschritts sich aus der Trocknungsluft im Tank abscheidende Kondensatmasse liegt zwischen 80g und 250g, insbesondere zwischen 100g und 180g, typischerweise zwischen 120g und 150g.

Die erfindungsgemäße Konstruktion erbringt mithin nicht nur eine im Vergleich zum Stand der Technik sehr viel schnellere Aufheizung des im Tank der Wärmepumpeneinrichtung bevorrateten Wassers. Es wird auch eine schnellere Spülguttrocknung dadurch erreicht, dass es infolge der Abkühlung der Trocknungsluft zu Kondensationseffekten kommt, und zwar im Tank der Wärmepumpeneinrichtung, womit das Wasser dem Spülbehälter entzogen ist, so dass die Spülguttrocknung beschleunigt vonstattengeht.

Im Ergebnis erbringt die erfindungsgemäße Ausgestaltung damit den synergetischen Effekt einer schnelleren Spülguttrocknung bei gleichzeitig energieeffizienterem Betrieb, da die in der Trocknungsluft befindliche Wärmeenergie auf das im Tank der Wärmepumpeneinrichtung befindliche Wasser übertragen wird, so dass eine Energierückgewinnung der ansonsten in der Trocknungsluft ungenutzt bleibenden Wärmeenergie stattfindet.

Gemäß einem weiteren Merkmal der Erfindung ist eine Ventilatoreinheit vorgesehen, die in den Luftzuführungskanal und/oder den Luftabführungskanal integriert oder im Deckenbereich des Tanks angeordnet ist. Dabei dient die Ventilatoreinheit dazu, im Betriebsfall in schon vorbeschriebener Weise Trocknungsluft im Umwälzbetrieb aus dem Spülbehälter in den Tank und wieder zurück in den Spülbehälter zu fördern. Es kann zu diesem Zweck eine in den Luftzuführungskanal integrierte Ventilatoreinheit vorgesehen sein, die Trocknungsluft aus dem Spülbehälter ansaugt und diese alsdann durch den Tank hindurch zurück in den Spülbehälter drückt. Alternativ oder in Ergänzung hierzu kann eine Ventilatoreinheit vorgesehen sein, die in den Luftabführungskanal integriert ist.

Gemäß einem weiteren Merkmal der Erfindung ist vorgesehen, dass der Luftzuführungskanal in Höhenrichtung der Geschirrspülmaschine oberhalb der Einmündungsstelle des Luftabführungskanals in den Spülraum einmündet.

Gemäß dieser geometrischen Ausgestaltung ist sichergestellt, dass der Lufteintritt aus dem Spülraum in den Luftzuführungskanal oberhalb der Lufteinführstelle aus dem Luftabführungskanal in den Spülraum liegt. Damit ist gleichzeitig sichergestellt, dass es zu keiner nennenswerten Luftdurchmischung innerhalb des Spülraums von noch warmer im Spülbehälter befindlicher Trocknungsluft einerseits und über den Luftabführungskanal in den Spülraum zugeführter kälterer Trocknungsluft andererseits kommt. Ferner stellt diese Anordnung sicher, dass noch möglichst warme Trocknungsluft dem Spülraum entnommen und dem Tank über den Luftzuführungskanal zugeführt wird.

Es ist deshalb gemäß einem weiteren Merkmal der Erfindung ferner bevorzugt, dass der Luftzuführungskanal möglichst nahe der Decke des Spülbehälters in den Spülraum einmündet. Dabei meint "möglichst nahe" im Sinne der Erfindung, dass der Lufteintritt in den Luftzuführungskanal in Höhenrichtung des Geschirrspülbehälters soweit nach oben wie möglich gelegt ist, mithin möglichst nahe zur Deckenwandung des Spülbehälters. Damit wird der positive Effekt unterstützt, im Betriebsfall möglichst warme Trocknungsluft über den Luftzuführungskanal in den Tank einführen zu können.

Gemäß einem weiteren Merkmal der Erfindung ist vorgesehen, dass der Luftzuführungskanal und/oder der Luftabführungskanal mit einer Verschlusseinrichtung ausgerüstet sind. Dabei gestattet es eine Verschlusseinrichtung, den jeweiligen Kanal vorzugsweise fluiddicht zu verschließen. Damit kann im Nichtbetriebsfall der Ventilatoreinheit sichergestellt werden, dass ein ungewollter Umluftbetrieb unterbleibt, mithin ein Umluftbetrieb nur während einer bestimmungsgemäßen Spülguttrocknung stattfinden kann, da ansonsten die Luftführungskanäle verschlossen ausgebildet sind. Ferner sorgen die Verschlusseinrichtungen im Verschlussfall dafür, dass aus dem offen ausgebildeten Tank der Wärmepumpeneinrichtung nicht ungewollt Wasser in die Luftführungskanäle und von dort aus gegebenenfalls in den Spülraum gelangen kann.

Gemäß einem weiteren Merkmal der Erfindung ist vorgesehen, dass eine Verschlusseinrichtung ein Verschlussmittel einerseits sowie ein damit zusammenwirkendes Stellglied andererseits aufweist. Dabei ist das Verschlussmittel mittels des Stellglieds aus einer Gebrauchsstellung in eine Nicht-Gebrauchsstellung und umgekehrt überführbar. Bevorzugterweise kann es sich bei dem Verschlussmittel um eine Klappe handeln, die in Gebrauchsstellung den zugehörigen Luftführungskanal fluiddicht absperrt. In der Nicht-Gebrauchsstellung ist die als Stellglied dienende Klappe verschwenkt, womit der vom jeweiligen Kanal bereitgestellte Durchströmungsquerschnitt zumindest teilweise geöffnet ausgebildet ist.

Gemäß einem weiteren Merkmal der Erfindung ist vorgesehen, dass das Stellglied an eine Steuereinheit kommunikationstechnisch angeschlossen ist. Bei der Steuereinheit kann es sich um die von der Geschirrspülmaschine ohnehin bereitgestellte Steuereinheit handeln. Mittels dieser wird die Stellung der Verschlussmittel gesteuert, vorzugsweise spülprogrammabhängig.

Es ist gemäß einem weiteren Merkmal der Erfindung vorgesehen, dass der Tank zur Überführung von Wasser in den Spülbehälter an den Spülraum strömungstechnisch angeschlossen ist.

Im bestimmungsgemäßen Betriebsfall kondensiert in der Trocknungsluft befindliche Feuchtigkeit aus, insbesondere direkt an der Oberfläche des Wassers und/oder Eises, und sammelt sich im Tank der Wärmepumpeneinrichtung an. Mit der Zeit steigt also die bevorratete Wassermasse innerhalb des Tanks. Um zu vermeiden, dass es zu ungewollten und/oder unkontrollierten Wasserausträgen aus dem Tank kommt, ist eine Leitung zur strömungstechnischen Anbindung des Tanks an den Spülbehälter vorgesehen. Im Bedarfsfall kann über diese Leitung überschüssiges Wasser aus dem Tank entfernt und in den Spülbehälter eingefördert werden. Dies kann entweder zu Beginn eines Spülprogramms erfolgen, so dass eine anschließende Nutzung des aus dem Tank stammenden Wassers während der Durchführung des Spülprogramms erfolgen kann. Alternativ kann am Ende eines Spülprogramms überschüssiges Wasser aus dem Tank entfernt und in den Spülbehälter überführt werden, so dass dann von dort aus durch Abpumpen ein Verwerfen stattfinden kann.

Mit der Erfindung wird desweiteren vorgeschlagen ein Verfahren zum Betrieb einer Geschirrspülmaschine der vorbeschriebenen Art, bei dem mit Beginn einer Spülguttrocknung Trocknungsluft in einem Umluftkreislauf durch den Spülbehälter und den Tank geführt wird.

Verfahrensseitig ist mithin vorgesehen, dass mit Beginn einer Spülguttrocknung die vergleichsweise warme Trocknungsluft dazu genutzt wird, das in einem vorangegangenen Spülschritt durch einen Betrieb der Wärmepumpeneinrichtung abgekühlte Wasser im Tank der Wärmepumpeneinrichtung aufzuheizen. Damit wird ein Teil der zuvor zur Aufheizung der Spülflotte eingesetzten Wärmeenergie zurückgewonnen. Verfahrensseitig ist zu diesem Zweck vorgesehen, dass die Trocknungsluft in einem dafür vorgesehenen Umluftkreislauf im Umwälzbetrieb umgewälzt wird, infolgedessen sie durch den Tank der Wärmepumpeneinrichtung geführt wird, wo es zu einem Wärmeübergang von Wärmeenergie aus der Trocknungsluft auf das im Tank bevorratete Wasser kommt. Die Trocknungsluft wird dabei insbesondere direkt mit dem Tankinhalt, also dem darin befindlichen Wasser und/oder Eis, in Kontakt gebracht, so dass eine direkte Stoffübertragung zwischen der Luft und der Oberfläche des Tankinhalts ermöglicht wird.

Verfahrensseitig ist desweiteren vorgesehen, dass der Umluftbetrieb, also die Führung der Trocknungsluft im Umluftkreislauf durch den Spülbehälter und den Tank, nach Abschluss eines Spülprogramms weitergeführt wird. Die Weiterführung des Umluftbetriebs ist deshalb von Vorteil, weil ein Spülprogramm regelmäßig bereits dann bestimmungsgemäß zu einem Abschluss gebracht werden kann, wenn das sich im Spülraum befindliche Spülgut noch warm ist, zumindest wärmer als die die Geschirrspülmaschine umgebende Raumluft. Diese im System befindliche Restwärme würde ungenutzt bleiben, wenn mit Ende eines Spülprogramms auch der Umluftbetrieb gestoppt würde. Es ist deshalb erfindungsgemäß vorgesehen, dass der Umwälzbetrieb der Trocknungsluft auch über das Ende eines Spülprogramms hinaus aufrecht erhalten bleibt, um so auch noch die am Ende eines Spülprogramms im Spülgut befindliche Restwärme rückgewinnen zu können.

Zum Betrieb des Umluftkreislaufs kann die Ventilatoreinheit, angesteuert durch die Steuereinheit, mit verschiedenen Gebläsedrehzahlen betrieben werden. Die Gebläsedrehzahl für den Umluftkreislauf während der Trocknung und/oder die Gebläsedrehzahl für den Umluftkreislauf während der Wärmerückgewinnung kann dabei insbesondere abhängig von dem eingestellten Spülprogramm gewählt sein, wobei für unterschiedliche Spülprogramme unterschiedlich hohe Drehzahlen vorgesehen sind. So kann beispielsweise bei einem für eine geringe Beladung vorgesehenem Spülprogramm während der Trocknung eine vergleichsweise geringe Drehzahl und somit ein geringer Volumenstrom vorgesehen sein als bei Normalbeladung, um ein zu schnelles Auskühlen des Spülraums zu vermeiden.

Die Gebläsedrehzahl für den Umluftkreislauf während der Trocknung und/oder die Gebläsedrehzahl für den Umluftkreislauf während der Wärmerückgewinnung kann auch abhängig von einer während des Reinigungsschritts und/oder des Klarspülschritts sensorisch erfassten Beladung, insbesondere der erfassten Art und/oder Menge - bzw. der daraus resultierenden spezifischen Wärmekapazität - der Beladung gewählt sein. Die Beladungserkennung kann dabei in an sich bekannter Weise insbesondere durch Erfassung von Umwälzpumpenmotorparametern und Spülflottentemperaturgradienten erfolgen. Wird eine Beladung mit geringer spezifischen Wärmekapazität erkannt, wird um ein zu schnelles Auskühlen des Spülraums zu vermeiden eine geringe Gebläsedrehzahl und somit ein geringer Volumenstrom für den Umluftkreislauf während der Trocknung eingestellt. Bei Erkennung einer hohen spezifischen Wärmekapazität wird die Gebläsedrehzahl für den Umluftkreislauf während der Trocknung dagegen zu Gunsten eines schnelleren Spülprogramms erhöht.

Die Bedieneinrichtung der Geschirrspülmaschine kann insbesondere auch ein Eingabemittel aufweisen, mit dem für eine besonders schnelle Wärmerückgewinnung eine erhöhte oder für einen besonders leisen Betrieb eine niedrigere Gebläsedrehzahl angewählt werden kann.

Im Trocknungsschritt kann in an sich bekannter Weise am Ende ein Abschnitt mit automatisch spaltweise geöffneter Tür vorgesehen sein. Für ein besonders leises Programm kann die Ventilatoreinheit dabei sobald diese automatische Türöffnung erfolgt auf eine niedrigere Gebläsedrehzahl eingestellt werden.

Ein weiteres vorgezogenes Ausführungsbeispiel sieht vor, dass die Gebläsedrehzahl mit abnehmender Spülraumtemperatur schrittweise oder stufenlos erhöht wird. Hierdurch kann der Volumenstrom dem optimalem Verhältnis von Verdunstung und Kondensation angepasst und die Energieeffizienz und Zeitdauer des Verfahrens optimiert werden.

Mit der Erfindung wird insgesamt eine Geschirrspülmaschine beziehungsweise ein Verfahren zum Betrieb einer solchen Geschirrspülmaschine vorgeschlagen, die beziehungsweise das eine Wiedereinsatzbereitschaft der Wärmepumpeneinrichtung schneller ermöglicht, als dies aus dem Stand der Technik vorbekannt ist. Denn der erfindungsgemäß vorgesehene Luftumwälzkreislauf gestattet es, dass das im Tank der Wärmepumpeneinrichtung bevorratete Wasser schneller auf die Mindestbetriebstemperatur gebracht werden kann, als dies mit einem Wärmeeintrag allein aus der Umgebungsluft gemäß dem Stand der Technik möglich ist. Ferner sorgt die erfindungsgemäße Ausgestaltung für eine schnellere Spülguttrocknung, da in der Trocknungsluft befindliche Feuchtigkeit durch Abkühlung im Tank der Wärmepumpeneinrichtung auskondensiert.

Weitere Merkmale und Vorteile der Erfindung ergeben sich aus der nachfolgenden Beschreibung anhand der Figuren. Dabei zeigen
- Fig. 1: in schematischer Darstellung eine erfindungsgemäße Geschirrspülmaschine;
- Fig. 2: in schematischer Ansicht einen Umluftkreislauf nach der Erfindung;
- Fig. 3: in schematischer Ansicht die Geschirrspülmaschine nach Figur 2 in einer ersten Funktionsstellung;
- Fig. 4: in schematischer Ansicht die Geschirrspülmaschine nach Figur 2 in einer zweiten Funktionsstellung;
- Fig. 5: in schematischer Darstellung die erfindungsgemäße Geschirrspülmaschine gemäß einer weiteren Ausführungsform in einer ersten Funktionsstellung;
- Fig. 6: in schematischer Darstellung die erfindungsgemäße Geschirrspülmaschine gemäß einer weiteren Ausführungsform in einer zweiten Funktionsstellung;
- Fig. 7: in schematischer Darstellung die erfindungsgemäße Geschirrspülmaschine in Schrägstellung;
- Fig. 8: ein Temperaturdiagramm;
- Fig. 9: ein Diagramm bezüglich des Kondensationsmassenstroms;
- Fig. 10: ein Diagramm bezüglich des Vereisungsgrads und
- Fig. 11: in schematischer Darstellung die erfindungsgemäße Geschirrspülmaschine in einer weiteren Ausführung.

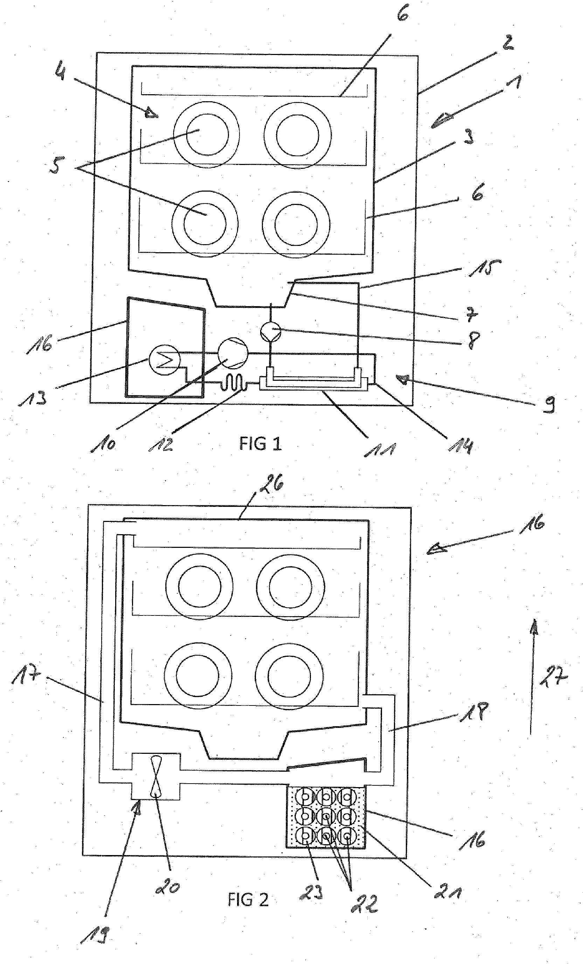

Fig. 1 lässt in rein schematischer Darstellung eine Geschirrspülmaschine 1 nach der Erfindung erkennen.

Die Geschirrspülmaschine 1 verfügt über ein Gehäuse 2, das unteranderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist. Bevorzugterweise verfügt eine solche Sprüheinrichtung über Sprüharme, die jeweils verdrehbar innerhalb des Spülbehälters 2 angeordnet sind.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an dem eine Umwälzpumpe 8 strömungstechnisch angeschlossen ist. Über entsprechende und in der Figur nicht näher dargestellte Versorgungsleitungen ist die in den Figuren ebenfalls nicht nachgestellte Sprüheinrichtung an die Umwälzpumpe 8 strömungstechnisch angeschlossen. Im bestimmungsgemäßen Verwendungsfall kann damit eine Beschickung der Sprüheinrichtung mit Spülflotte mittels der Umwälzpumpe 8 stattfinden.

Die Geschirrspülmaschine 1 verfügt desweiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit Wasser 21 als Wärmeträgermedium befüllt ist.

Im bestimmungsgemäßen Verwendungsfall der Wärmepumpeneinrichtung 9 findet mit Hilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe angeschlossener Umwälzkreislauf 15 vorgesehen, der der Spülflottenumwälzung dient. Die im Betriebsfall im Verflüssiger 11 durch Verflüssigung des Arbeitsmediums freiwerdende Wärmeenergie wird mithin auf die im Umwälzkreislauf 15 umgewälzte Spülflotte vorgetragen, zu welchem Zweck ein entsprechend ausgebildeter Wärmetauscher vorgesehen ist.

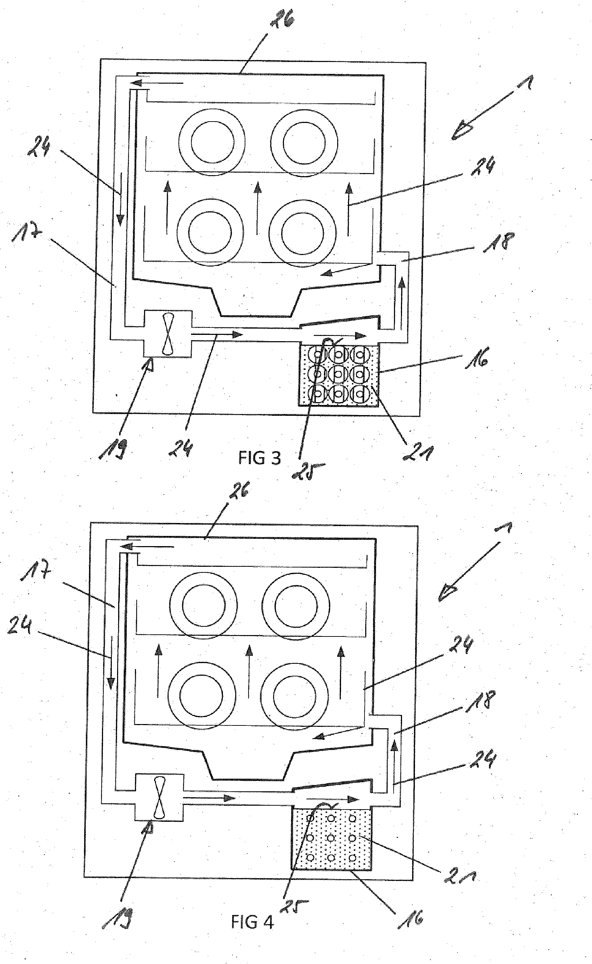

Wie sich insbesondere aus den nachfolgenden Figuren 2 bis 7 und 11 ergibt, ist der Tank 16 an einen Luftzuführungskanal 17 und an einen Luftabführungskanal 18 strömungstechnisch angeschlossen. Anderendseitig, das heißt tankentferntseitig münden die beiden Luftführungskanäle 17 und 18 jeweils in den Spülraum 4 ein. Es ist so ein Umluftkreislauf zwischen Spülraum und Wassertank 16 geschaffen, der es ermöglicht, Luft in einem Umwälzkreislauf zu führen, und zwar aus dem Spülraum 4 durch den Luftzuführungskanal 17 hindurch in den Tank 16 und von dort aus durch den Luftabführungskanal 18 zurück in den Spülraum 4. Dieser Umwälzbetrieb ist anhand von Pfeilen 24 in den Figuren 3 und 4 im Einzelnen dargestellt.

Der Tank 16 ist derart gestaltet, dass die durchgeleitete Luft in direktem Kontakt mit dem Tankinhalt, bevorzugter Weise Wasser kommt. Er ist somit ausgestaltet das eine direkte Stoffübertragung zwischen beiden Medien ermöglicht wird.

Zur Luftumwälzung dient eine Ventilatoreinheit 19, die im gezeigten Ausführungsbeispiel in den Luftzuführungskanal 17 integriert ist. Alternativ ist auch die Integration einer solchen Ventilatoreinheit 19 in den Luftabführungskanal 18 oder im oberen Bereich des Tankdeckels denkbar.

Die Ventilatoreinheit 19 verfügt über ein motorgetriebenes Laufrad 20. Im Betriebsfall verdreht das Laufrad 20, wodurch Luft aus dem Spülraum 4 angesogen und in den schon vorbeschriebenen Umluftkreislauf auch durch den Wassertank 16 geführt wird. Als Ventilatoreinheit 19 können beispielsweise Axial- oder Radialventilatoren eingesetzt werden.

Der von der Ventilatoreinheit 19 während der Trocknung geförderte Volumenstrom liegt vorzugsweise bei 5 - 35m³/h, besonders bevorzugt bei 10 - 25m³/h
Die Ventilatoreinheit kann, angesteuert durch die Steuereinheit, mit verschiedenen Gebläsedrehzahlen betrieben werden. Die Gebläsedrehzahl für den Umluftkreislauf während der Trocknung und/oder die Gebläsedrehzahl für den Umluftkreislauf während der Wärmerückgewinnung kann insbesondere abhängig von dem eingestellten Spülprogramm gewählt sein, wobei für unterschiedliche Spülprogramme unterschiedlich hohe Drehzahlen vorgesehen sind. So kann beispielsweise bei einem für eine geringe Beladung vorgesehenem Spülprogramm während der Trocknung eine vergleichsweise geringe Drehzahl und somit ein geringer Volumenstrom vorgesehen sein als bei Normalbeladung, um ein zu schnelles Auskühlen des Spülraums zu vermeiden.

Die Gebläsedrehzahl für den Umluftkreislauf während der Trocknung und/oder die Gebläsedrehzahl für den Umluftkreislauf während der Wärmerückgewinnung kann auch abhängig von einer während des Reinigungsschritts und/oder des Klarspülschritts sensorisch erfassten Beladung, insbesondere der erfassten Art und/oder Menge - bzw. der daraus resultierenden spezifischen Wärmekapazität - der Beladung gewählt sein. Die Beladungserkennung kann dabei in an sich bekannter Weise insbesondere durch Erfassung von Umwälzpumpenmotorparametern und Spülflottentemperaturgradienten erfolgen. Wird eine Beladung mit geringer spezifischen Wärmekapazität erkannt, wird um ein zu schnelles Auskühlen des Spülraums zu vermeiden eine geringe Gebläsedrehzahl und somit ein geringer Volumenstrom für den Umluftkreislauf während der Trocknung eingestellt. Bei Erkennung einer hohen spezifischen Wärmekapazität wird die Gebläsedrehzahl für den Umluftkreislauf während der Trocknung dagegen zu Gunsten eines schnelleren Spülprogramms erhöht.

Die Bedieneinrichtung der Geschirrspülmaschine kann insbesondere auch ein Eingabemittel aufweisen, mit dem für eine besonders schnelle Wärmerückgewinnung eine erhöhte oder für einen besonders leisen Betrieb eine niedrigere Gebläsedrehzahl angewählt werden kann.

Im Trocknungsschritt kann in an sich bekannter Weise am Ende ein Abschnitt mit automatisch spaltweise geöffneter Tür vorgesehen sein. Für ein besonders leises Programm kann die Ventilatoreinheit dabei sobald diese automatische Türöffnung erfolgt auf eine niedrigere Gebläsedrehzahl eingestellt werden.
Ein weiteres vorgezogenes Ausführungsbeispiel sieht vor ,dass die Gebläsedrehzahl mit abnehmender Spülraumtemperatur schrittweise oder stufenlos erhöht wird. Hierdurch kann der Volumenstrom dem optimalem Verhältnis von Verdunstung und Kondensation angepasst werden.

Die Wärmepumpeneinrichtung 9 dient im bestimmungsgemäßen Verwendungsfall in an sich bekannter Weise dazu, die Aufheizung der Spülflotte zu bewirken, zumindest teilweise. Infolgedessen kommt es zu einer Abkühlung des im Tank 16 befindlichen Wassers 21, bis hin zum Einfrieren desselben, so dass sich Eis im Tank 16 bildet. Eine erneute Verwendung der Wärmepumpeneinrichtung 9 ist erst dann wieder energetisch sinnvoll möglich, wenn das im Tank 16 befindliche Eis wieder aufgetaut beziehungsweise das Wasser 21 eine Mindesttemperatur erreicht hat. Um das Auftauen beziehungsweise das Erreichen der Mindesttemperatur zu beschleunigen, dienen die erfindungsgemäßen Luftführungskanäle 17 und 18, die es ermöglichen, mit Beginn einer Spülguttrocknung Trocknungsluft in einem Umluftkreislauf durch den Spülbehälter 3 und den Tank 16 zu führen.

Der letzte Programmschritt eines Spülprogramms sieht typischerweise die Spülguttrocknung vor. Dabei kommt bei gattungsgemäßen Geschirrspülmaschinen die sogenannte Kondensationstrocknung zum Einsatz. Danach ist vorgesehen, dass die sich im Spülraum befindliche Luft an dem in einen vorangegangenen Programmschritt aufgeheizten und noch warmen Spülgut erwärmt und die im Spülraum befindliche Feuchtigkeit in Form von Dampf aufnimmt. An den vergleichsweise kühlen Spülraumwänden kühlt die Spülraumluft ab, so dass es dort zu Kondensationseffekten kommt. Das auskondensierte Wasser sammelt sich im Sammeltopf der Geschirrspülmaschine an und kann weiterverwendet oder verworfen werden.

Mit der erfindungsgemäßen Konstruktion ist es nun ermöglicht, die im Trocknungsschritt warme und feuchte Luft dem Spülraum zu entziehen und dem Tank 16 zuzuführen. Hier kommt es dann zu einem Wärmeübertrag aus der warmen Trocknungsluft auf das im Tank 16 befindliche Wärmetauschermedium, was ein Auftauen von Eis beziehungsweise eine Erwärmung von Wasser 21 beschleunigt. Ein Auftauen von im Tank 16 befindlichem Eis wird in Abkehr zum Stand der Technik also nicht nur durch Wärmeentzug aus der die Geschirrspülmaschine umgebenden Raumluft bewerkstelligt, es erfolgt darüber hinaus ein Wärmeübertrag aus der dem Tank 16 zugeführten Trocknungsluft, was insbesondere ein Auftauen eines vereisten Tanks 16 erheblich beschleunigt.

Die Zufuhr von Trocknungsluft in den Tank 16 bewirkt desweiteren den positiven Effekt, dass es zu einer beschleunigten Kondensation des in der Trocknungsluft befindlichen Wasserdampfs kommt. Im Ergebnis wird so auch eine schnellere Trocknung des Spülguts 5 erreicht.

Im Ergebnis erbringt die erfindungsgemäße Konstruktion im Wesentlichen drei Vorteile. Zum einen wird eine schnellere Spülguttrocknung erreicht. Zum anderen wird das Auftauen von im Tank 16 befindlichem Eis beschleunigt. Nicht zuletzt findet eine Wärmerückgewinnung statt, die sich energetisch auf den Gesamtprozess positiv auswirkt.

Um sicherzustellen, dass im Betriebsfall möglichst warme Trocknungsluft aus dem Spülraum 4 angesogen wird, mündet der Luftzuführungskanal 17 in Höhenrichtung 27 der Geschirrspülmaschine 1 oberhalb der Einmündungsstelle des Luftabführungskanals 18 in den Spülraum 4 ein. Dabei ist besonders bevorzugt, dass der Luftzuführungskanal 17 möglichst nahe der Decke 26 des Spülbehälters 3 in den Spülraum 4 einmündet.

Fig. 2 lässt einen Betriebszustand erkennen, wie er sich unmittelbar nach Beendigung eines Klarspülens, das heißt vor Beginn einer Spülguttrocknung einstellt. Aufgrund der Spülflottenaufheizung während des Klarspülens unter Verwendung der Wärmepumpeneinrichtung 9 sind die im Tank 16 angeordneten Verdampferrohre 22 des Verdampfers 13 zumindest teilweise vereist und mit einem Eismantel 23 umgeben.

Mit Beginn der Spülguttrocknung, wird die Ventilatoreinheit 19 eingeschaltet, was eine Umluftführung der Trocknungsluft ergibt, wie in Fig. 3 anhand der Pfeile 24 schematisch dargestellt ist.

Die Ventilatoreinheit 19, die in den gezeigten Ausführungsbeispielen auf der Eingangsseite des Tanks 16 angeordnet ist, fördert abgesaugte Spülraumluft durch den Wassertank 16 und damit direkt über die Oberfläche 25 des im Tank 16 bevorrateten Wassers 21 beziehungsweise des sich durch Vereisung gebildeten Eises. Infolge dieser Luftströmung kommt es zu einem Wärmeeintrag, was zur Aufheizung des Wassers 21 beziehungsweise zu einem Auftauen des sich dort befindlichen Eises führt. Der aus dem Tank 16 austretende Luftstrom hat einen niedrigeren energetischen Zustand als der zugeführte warme Luftstrom. Im Falle von feuchter Spülraumluft wird die Luftfeuchtigkeit auf der Oberfläche 25 im Tank 16 kondensiert. Dies hat zur Folge, dass die absolute Luftfeuchtigkeit tankeingangsseitig höher ist als die absolute Luftfeuchtigkeit tankausgangsseitig. Zudem erfolgt eine Abkühlung der Luft um mehrere Grad Celsius. Für den Fall, dass keine Luftfeuchtigkeit mehr im Tank kondensiert oder die Luftzustände im Gleichgewichtszustand sind, ist die Eintrittstemperatur der Luft höher als am Ausgang. Somit wird nun noch die sensible Wärme aus dem Spülraum genutzt und der Spülraum inklusive Beladung abgekühlt, während der Tank weiter auftaut beziehungsweise erwärmt wird. Der aufgetaute Zustand des im Tank 16 befindlichen Wassers 21 ist in Fig. 4 dargestellt.

Nach einem Auftauen von im Tank 16 befindlichem Eis, das heißt nach einer Beendigung der sogenannten "Eis-Trocknung" schließt sich nahtlos eine aktive Wärmerückgewinnung an, indem der Spülraum samt Beladung weiterhin sensibel abgekühlt wird, obwohl dies für das eigentliche Trocknungsergebnis nicht weiter von Relevanz ist. Erfindungsgemäß läuft also der Luftumwälzbetrieb nach einem Ende des Spülprogramms nach, so dass weiterhin vom noch warmen Spülgut aufgewärmte Luft durch den Tank 16 geführt wird. Die Zeitdauer des Nachlaufs kann fest vorgegeben oder über Sensoren in den Luftkanälen oder im Tank gesteuert sein.

Für diese Wärmerückgewinnung nach der Trocknung wird die Ventilatoreinheit 19 mit einer im Vergleich zur Trocknung erhöhten Gebläsedrehzahl betrieben, und zwar insbesondere so, dass der in dieser Phase im Umluftkreislauf durch den Tank geförderte Volumenstrom ein Vielfaches, vorzugsweise das 2 bis 6-fache, insbesondere 3 bis 4-fache des während der Trocknung geförderten Volumenstromes beträgt.

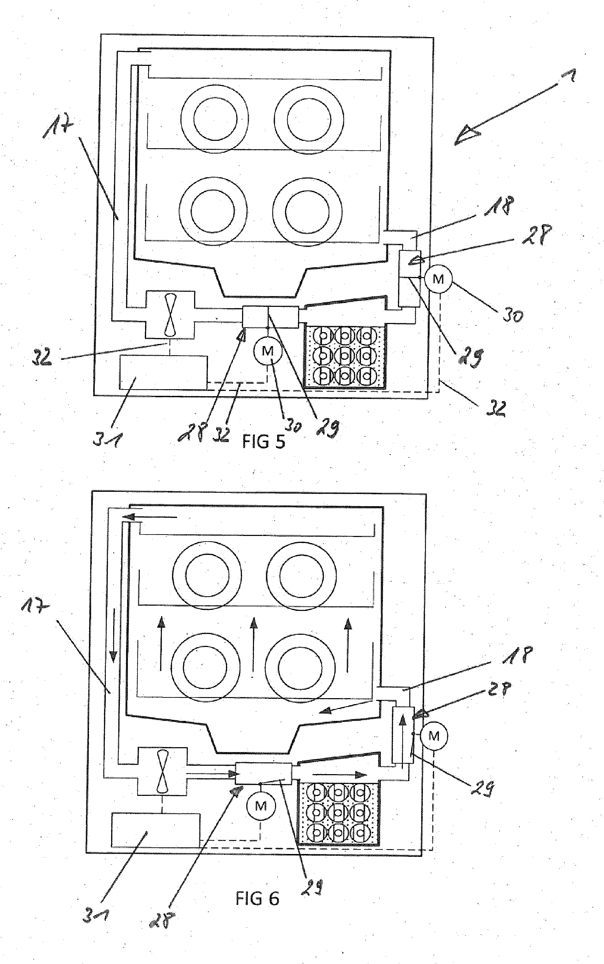

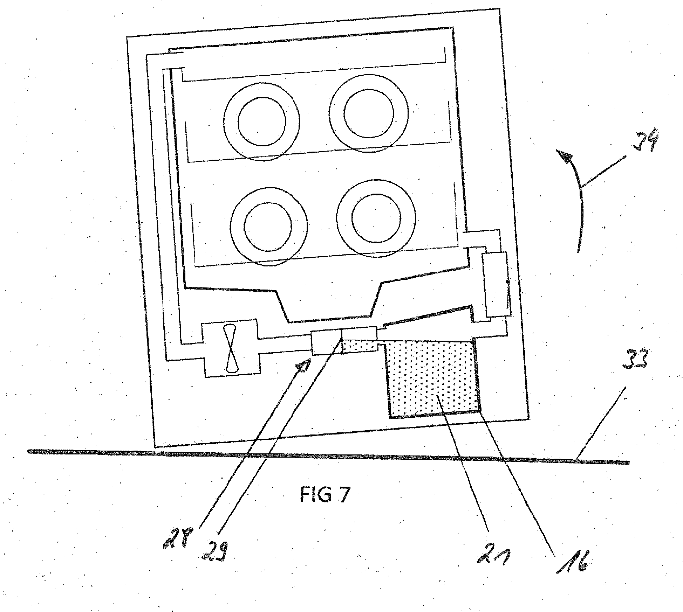

Die Figuren 5, 6 und 7 lassen eine weitere Ausführungsform der erfindungsgemäßen Geschirrspülmaschine 1 erkennen. Gemäß dieser Ausführungsform verfügen die Luftführungskanäle 17 und 18 jeweils über Verschlusseinrichtungen 28, die dazu dienen, den jeweiligen Luftführungskanal 17 bzw. 18 vorzugsweise fluiddicht abzuschließen. Dabei ist im geschlossenen Zustand einer Verschlusseinrichtung 28 sichergestellt, dass weder ungewollt Luft aus dem Spülraum 4 in den Tank 16 gelangen kann, noch dass ungewollt Wasser 21 aus dem Tank 16 in das Luftkanalsystem überführt wird. Insbesondere letzteres ist bei einem Transport der Geschirrspülmaschine 1 von Wichtigkeit, wie Fig. 7 am Beispiel einer in Richtung des Pfeils 34 gegenüber dem Aufstellungsgrund 33 verkippten und damit schräg gestellten Geschirrspülmaschine 1 erkennen lässt.

Eine Verschlusseinrichtung 28 verfügt über ein Verschlussmittel 29 einerseits und über ein Stellglied 30 andererseits. Bei dem Verschlussmittel 29 kann es sich beispielsweise um eine verdrehbar gelagerte Klappe handeln, die aus einer Gebrauchsstellung gemäß Fig. 6 in eine Nicht-Gebrauchsstellung gemäß Fig. 5 überführt werden kann. Dabei dient zur Überführung des Verschlussmittels 29 aus der einen in die andere Stellung ein Stellglied 30, bei dem es sich beispielsweise um einen elektrobetriebenen Motor handeln kann. Eine besonders bevorzugte Ausgestaltung der Verschlusseinrichtung 28 sieht vor, dass sie sich im stromlosen beziehungsweise spannungslosen Zustand von alleine wieder in die Nicht-Gebrauchsstellung nach Fig.5 verfährt. Somit ist sichergestellt, dass bei einem Transport der Tank nicht auslaufen kann. Eine rein schwerkraftgesteuerte Verschlusseinrichtung stellt eine weitere Ausgestaltungsmöglichkeit dar.

Zur Ansteuerung der Verschlusseinrichtung 28 dient eine Steuereinheit 31, die in kommunikationstechnische Verbindung 32 mit den jeweiligen Stellgliedern 30 steht.

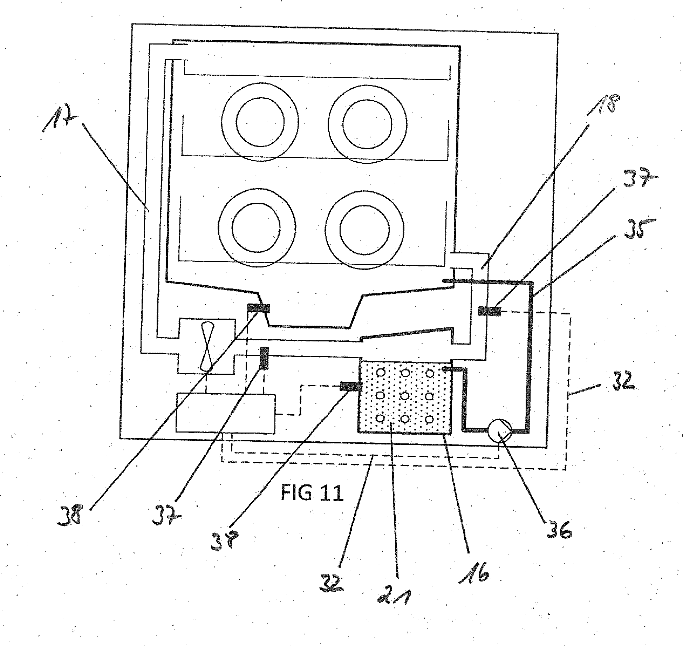

Fig. 11 lässt eine weitere Ausführungsvariante erkennen.

Da sich während einer vorbeschriebenen Verfahrensdurchführung Kondensat im Tank 16 ansammelt, steigt mit der Zeit die im Tank 16 gespeicherte Wassermasse. Um eine Rückführung von überschüssigem Wasser 21 in den Spülraum 4 zu ermöglichen, ist eine Leitung 35 vorgesehen, die den Tank 16 wasserströmungstechnisch mit dem Spülraum 4 verbindet. In die Leitung 35 ist eine Pumpe 36 integriert, die in kommunikationstechnischer Verbindung 32 mit der Steuereinheit 31 steht. Damit ist insbesondere eine spülprogrammabhängige Steuerung der Pumpe 36 möglich, so dass zur Vermeidung eines Überlaufens des Tanks 16 ein frühzeitiges Abpumpen von überflüssigem Wasser 21 erfolgen kann. Der Saugstutzen der Pumpe 36 kann dabei vorzugsweise so am Tank angebracht sein, dass der Tank 16 auf ein bestimmtes Niveau leergepumpt werden kann. Eine einfache zeitliche Ansteuerung der Pumpe 36 ist somit ausreichend. Auch eine Füllstandsüberwachung kann somit entfallen. Ist der Flüssigkeitspegel auf die Anschlussstutzenhöhe abgefallen, saugt die Pumpe 36 Luft an und der Tank 16 wird nicht weiter entleert. Es handelt sich somit um eine Teilabförderung des Tankinhalts aus dem Tank 16, insbesondere der Menge Wasser, die durch Kondensation während eines Trocknungsschritts angefallen ist. Damit ist sichergestellt, dass der Tankinhalt, der als Wärmeträger für das Aufheizen der Spülmaschine dient, immer ausreichend ist. Somit kann ein gesondertes Nachfüllen des Tanks entfallen und es kann sogar auch gänzlich auf eine zusätzliche Befülleinrichtung für den Tank 16 verzichtet werden. Vielmehr wird der Tank 16 bei jedem Trocknungsschritt durch das Kondensieren der Luftfeuchtigkeit aufgefüllt. Das Abpumpen der kondensierten Menge erfolgt idealerweise in einem Programmschritt im nächsten Programmablauf.

Eine weitere nicht näher dargestellte Ausführungsform stellt die Teilentleerung des Tanks 16 über ein Ventil und nicht über eine Pumpe 36 dar. Vorzugsweise kann die Entleerung rein über Schwerkraft erfolgen. Das Ventil wird hierzu für ein bestimmtes Zeitintervall geöffnet. Im Vergleich zur Pumpe 36 in Fig. 11 treten keine/weniger Geräusche durch ein mögliches Ansaugen von Luft auf. Damit die Teilentleerung über Schwerkraft beispielsweise in den Sammeltopf 7 funktioniert, ist der Anschlussstutzen in Höhenrichtung am Tank 16 entsprechend ausgebildet.

Zur Steuerung sowohl des Luftführungsbetriebs als auch der Wasserabpumpung können Temperatursensoren 37 und 38 vorgesehen sein, die über entsprechende kommunikationstechnische Verbindungen 32 erfasste Daten an die Steuereinheit 31 zur Auswertung übersenden. Dabei können Temperatursensoren 37 für die Luft als auch Temperatursensoren 38 für das Wasser 21 vorgesehen sein.

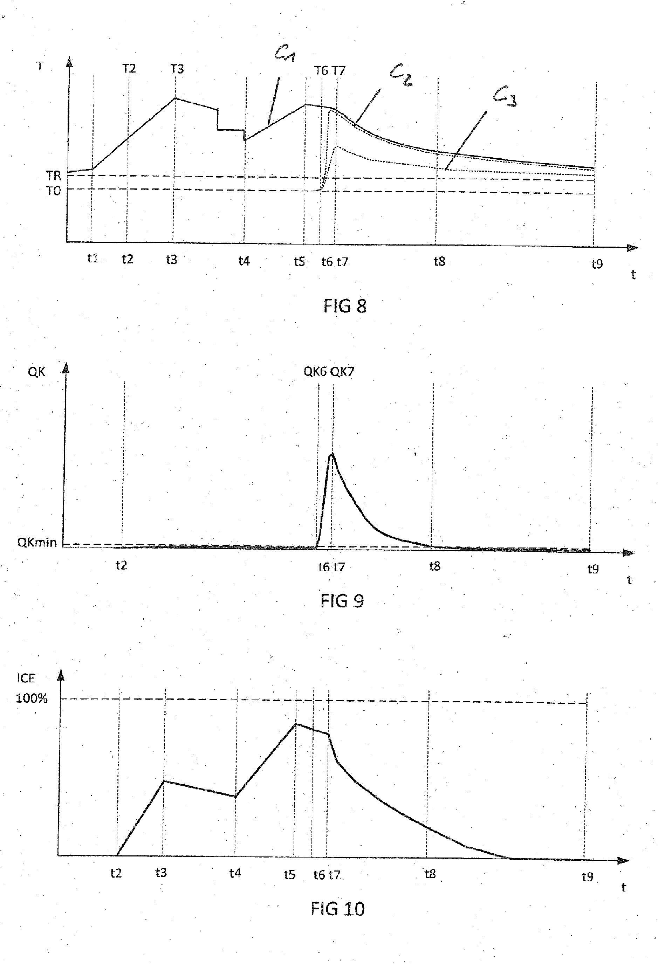

Fig. 8 lässt in einem Diagramm einen Temperaturverlauf erkennen, wobei die Temperatur T auf der Y-Achse über der Zeit t auf der X-Achse abgetragen ist. Dabei betrifft die durchgezogene Linie C1 die Spülraumtemperatur. Die gepunkteten Linien C2 und C3 betreffen die Lufttemperatur am Eintritt des Tanks (C2) beziehungsweise am Austritt des Tanks (C3).

Aus dem Temperaturdiagramm nach Fig. 8 ergibt sich folgender Verfahrensablauf: Die Geschirrspülmaschine wird bei t0 mit Raumtemperatur TR gestartet. Der Wassertank 16 hat ebenfalls Raumtemperatur. Während eines Vorspülens erwärmt sich die Geschirrspülmaschine nur leicht. Zum Zeitpunkt t1 wird die Wärmepumpeneinrichtung 9 gestartet und heizt die Geschirrspülmaschine 1 über die Temperatur T2 auf T3 auf. T2 beziehungsweise t2 definiert den Punkt, an dem der Tank 16 keine sensible Wärme mehr an den Verdampfer 13 abgeben kann und somit der Phasenwechsel beginnt. Dabei beginnt der Tank 16 partiell an den Rohrwandungen des Verdampfers 13 einzufrieren. Zum Zeitpunkt t3 ist im Tank 16 beispielsweise 40% bis 60% Eismasse angefallen. Zwischen t3 und t4 schließen sich die Haltezeit im Reinigen sowie das Zwischenspülen an. Ebenso erfolgt zwischen t3 und t4 ein Energieeintrag in den Tank 16 überwiegend durch Wärmestrahlung des Spülbehälters, so dass der Tank 16 wieder leicht auftaut.

Im Klarspülen wird von T4 auf Klarspültemperatur T5 bei t5 mittels der Wärmepumpeneinrichtung 9 geheizt, was dazu beiträgt, dass der Tank 16 weiter einfriert, wobei sich Eismasse in einem Bereich von 70% bis 85% ergibt. In der Haltezeit während des Klarspülens und in der Abtropfphase zwischen t5 und t6 beginnt der Tank leicht aufzutauen.

Zum Zeitpunkt t6 wird der Umluftkreislauf durch Einschalten der Ventilatoreinheit 19 und somit die Trocknungsphase gestartet. Die Temperatur T6 liegt bei ca. zwischen 35°C und 65°C, bevorzugt zwischen 40°C und 58°C und besonders bevorzugt zwischen 43°C und 47°C. Die gesättigte Spülraumluft trifft auf die Eisfläche 25 im Tank 16 und kondensiert sehr stark aus, was in Fig. 9 zu erkennen ist. Mit andauernder Trocknungsdauer nimmt die Feuchtigkeit im Spülraum durch die aktive Entfeuchtung stark ab, so dass weniger Kondensatmassenstrom im Tank 16 anfällt, wie dies das Diagramm nach Fig. 9 erkennen lässt. Da die Verdunstung stark mit der Temperatur des Spülguts 5 zusammenhängt, ist es gegebenenfalls vorteilhaft, eine drehzahlgeregelte Ventilatoreinheit 19 einzusetzen und die Drehzahl in Abhängigkeit der Spülraumtemperatur beziehungsweise Lufttemperatur oder einer anderen Führungsgröße zu regeln. Die Trocknung des Spülguts 5 ist zum Zeitpunkt t8 beendet. Bis dahin fällt immer weniger Kondensat im Tank 16 an, da immer weniger vom Spülgut 5 verdunstet und es zuletzt trocken ist. Das Spülgut 5 ist bei t8 trocken, aber im Vergleich zur Raumtemperatur TR noch warm.

Es schließt sich deshalb nach der Trocknung des Spülguts 5 eine weitergehende Wärmerückgewinnung durch Auftauen des Tanks 16 an, das heißt ab t8 nahtlos. Dies auch dann, wenn das Spülprogramm zu diesem Zeitpunkt bereits beendet sein sollte.

Wie in der Figur 10 zu erkennen ist, ist der Tank zu diesem Zeitpunkt noch ca. 25% bis 40% eingefroren. Von Beginn an der Wärmerückgewinnung bei t8 bis t9 wird der Tank 16 komplett aufgetaut und größtenteils sensibel erwärmt. Diese Wärmerückgewinnung sollte auf jeden Fall bei einer Temperaturdifferenz zwischen Spülraumtemperatur und Tanktemperatur von 3 bis 4 Kelvin abgeschaltet werden. Dies verhindert eine Rückverdunstung des Wassers 21 aus dem Tank 16 in den Spülraum 4.

In einer weiteren nicht näher dargestellten Verfahrensvariante wird die Wärmerückgewinnung nach dem Programmende auch weiterhin fortgesetzt, selbst wenn die Tür des Geschirrspülers am Ende der Spülprogramms durch den Nutzer oder programmtechnisch automatisch durch eine nicht dargestellte, dem Fachmann an sich bekannte Türöffnungsvorrichtung, geöffnet wurde. Somit kann Raumluft im oberen Bereich des Spülraums angesaugt und zum Auftauen des Tanks geleitet werden. Die kalte in den Spülraum eintretende Luft strömt dann seitlich über die angekippte Tür in den Raum aus.

### Bezugszeichen

- 1: Geschirrspülmaschine
- 2: Gehäuse
- 3: Spülbehälter
- 4: Spülraum
- 5: Spülgut
- 6: Spülkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf (der Wärmepumpe)
- 15: Umwälzkreislauf (der Spülflotte)
- 16: Tank
- 17: Luftzuführungskanal
- 18: Luftabführungskanal
- 19: Ventilatoreinheit
- 20: Laufrad
- 21: Wasser
- 22: Verdampferrohr
- 23: Eismantel
- 24: Pfeil (Luftströmung)
- 25: Oberfläche
- 26: Decke
- 27: Höhenrichtung
- 28: Verschlusseinrichtung
- 29: Verschlussmittel
- 30: Stellglied
- 31: Steuereinheit
- 32: kommunikationstechnische Verbindung
- 33: Aufstellgrund
- 34: Pfeil (Verkipprichtung)
- 35: Leitung
- 36: Pumpe
- 37: Temperatursensor Luft
- 38: Temperatursensor Wasser

## Patentansprüche

1. Geschirrspülmaschine, insbesondere Haushaltsgeschirrspülmaschine, mit einem einen Spülraum (4) bereitstellenden Spülbehälter (3), der der Aufnahme von zu reinigendem Spülgut (5) dient, und einer Wärmepumpeneinrichtung (9), die einen Verdampfer (13) aufweist, der innerhalb eines mit Wasser befüllten Tanks (16) angeordnet ist,
**dadurch gekennzeichnet,**
**dass** der Tank (16) an einen Luftzuführungskanal (17) und an einen Luftabführungskanal (18) strömungstechnisch angeschlossen ist, wobei der Luftzuführungskanal (17) und der Luftabführungskanal (18) jeweils anderendseitig in den Spülraum (4) einmünden, sodass Luft über den Luftzuführungskanal (17) aus dem Spülraum (4) in den Tank (16), wobei die Luft in unmittelbaren Kontakt mit dem im Tank bevorrateten Wasser gelangt, und von dort über den Luftabführungskanal (16) zurück in den Spülraum (4) gefördert werden kann.

2. Geschirrspülmaschine nach Anspruch 1, **gekennzeichnet, durch** eine in den Luftzuführungskanal (17) und/oder den Luftabführungskanal (18) integrierte Ventilatoreinheit (19).

3. Geschirrspülmaschine nach Anspruch 1 oder 2, **dadurch gekennzeichnet, dass** der Luftzuführungskanal (17) in Höhenrichtung (27) der Geschirrspülmaschine (1) oberhalb der Einmündungsstelle des Luftabführungskanals (18) in den Spülraum (4) einmündet.

4. Geschirrspülmaschine nach einem der vorhergehenden Ansprüche, **dadurch gekennzeichnet, dass** der Luftzuführungskanal (17) möglichst nahe der Decke (26) des Spülbehälters (3) in den Spülraum (4) einmündet.

5. Geschirrspülmaschine nach einem der vorhergehenden Ansprüche, **dadurch gekennzeichnet, dass** der Luftzuführungskanal (17) und/oder der Luftabführungskanal (18) mit einer Verschlusseinrichtung (28) ausgerüstet sind.

6. Geschirrspülmaschine nach Anspruch 5, **dadurch gekennzeichnet, dass** eine Verschlusseinrichtung (28) ein aus einer Gebrauchsstellung in eine Nicht-Gebrauchsstellung und umgekehrt überführbares Verschlussmittel (29) und ein damit zusammenwirkendes Stellglied (30) aufweist.

7. Geschirrspülmaschine nach Anspruch 6, **dadurch gekennzeichnet, dass** das Stellglied (30) an eine Steuereinheit (31) kommunikationstechnisch angeschlossen ist.

8. Geschirrspülmaschine nach einem der vorhergehenden Ansprüche, **dadurch gekennzeichnet, dass** der Tank (16) zur Überführung von Wasser in den Spülbehälter (3) an den Spülraum (4) strömungstechnisch angeschlossen ist.

9. Geschirrspülmaschine nach einem der vorhergehenden Ansprüche, **dadurch gekennzeichnet, dass** die durch den Inhalt des Tanks (16) gebildete Oberfläche (25) durch die in den Tank (16) eintretende Luft anströmbar ausgebildet ist.

10. Verfahren zum Betrieb einer Geschirrspülmaschine (1) nach einem der vorhergehenden Ansprüche, bei dem mit Beginn einer Spülguttrocknung Trocknungsluft in einem Umluftkreislauf durch den Spülbehälter (3) und den Tank (16) geführt wird.

11. Verfahren nach Anspruch 10, **dadurch gekennzeichnet, dass** der Umluftbetrieb nach Abschluss eines Spülprogramms weitergeführt wird.

12. Verfahren nach einem der Ansprüche 10 oder 11, **dadurch gekennzeichnet, dass** der Umluftbetrieb nach Öffnen der Spülmaschinentür weitergeführt wird.

13. Verfahren nach einem der Ansprüche 10 bis 12, **dadurch gekennzeichnet, dass** Luftfeuchtigkeit von in den Tank (16) eintretender Luft an der durch den Inhalt des Tanks (16) gebildeten Oberfläche (25) unmittelbar kondensiert.

14. Verfahren nach dem vorhergehenden Anspruch, dass das anfallende Kondensat in einem nachfolgenden Wassereinlauf in einem nachfolgenden Spülprogramm abgepumpt oder in den Spülbehälter (3) geleitet wird und/oder der Tank (16) auf ein Referenzniveau teilentleert wird.

## Claims

1. Dishwasher, in particular a domestic dishwasher, comprising a washing container (3) which provides a washing chamber (4) and is used to receive items to be washed (5), and comprising a heat pump device (9) which has an evaporator (13) which is arranged inside a tank (16) filled with water,
**characterised in that**
the tank (16) is fluidically connected to an air supply duct (17) and to an air discharge duct (18), the other ends of each of the air supply duct (17) and the air discharge duct (18) opening into the washing chamber (4) such that air can be conveyed from the washing chamber (4) through the air supply duct (17) into the tank (16), the air coming into direct contact with the water stored in the tank, and from there through the air discharge duct (16) back into the washing chamber (4).

2. Dishwasher according to claim 1, **characterised by** a fan unit (19) integrated in the air supply duct (17) and/or the air discharge duct (18).

3. Dishwasher according to either claim 1 or claim 2, **characterised in that** the air supply duct (17) opens into the washing chamber (4) above the opening point of the air discharge duct (18) in the height direction (27) of the dishwasher (1).

4. Dishwasher according to any of the preceding claims, **characterised in that** the air supply duct (17) opens into the washing chamber (4) as close as possible to the ceiling (26) of the washing container (3).

5. Dishwasher according to any of the preceding claims, **characterised in that** the air supply duct (17) and/or the air discharge duct (18) are provided with a closure device (28).

6. Dishwasher according to claim 5, **characterised in that** a closure device (28) comprises a closure means (29) which can be transferred out of an operative position into an inoperative position and vice versa, and an actuator (30) which cooperates therewith.

7. Dishwasher according to claim 6, **characterised in that** the actuator (30) is communicatively connected to a control unit (31).

8. Dishwasher according to any of the preceding claims, **characterised in that** the tank (16) is fluidically connected to the washing chamber (4) in order to transfer water into the washing container (3).

9. Dishwasher according to any of the preceding claims, **characterised in that** the surface (25) formed by the contents of the tank (16) is designed such that the air entering the tank (16) can flow thereagainst.

10. Method for operating a dishwasher (1) according to any of the preceding claims, wherein, at the beginning of a process for drying washed items, drying air is conveyed through the washing container (3) and the tank (16) in a recirculation circuit.

11. Method according to claim 10, **characterised in that** the recirculation operation is continued after the completion of a washing program.

12. Method according to either claim 10 or claim 11, **characterised in that** the recirculation operation is continued after opening the dishwasher door.

13. Method according to any of claims 10 to 12, **characterised in that** humidity of air entering the tank (16) directly condenses on the surface (25) formed by the contents of the tank (16).

14. Method according to the preceding claim, **characterised in that** the resulting condensate is pumped away in a subsequent water intake in a subsequent washing program or conducted into the washing container (3) and/or the tank (16) is partially emptied to a reference level.

## Revendications

1. Lave-vaisselle, en particulier lave-vaisselle électroménager, comprenant un récipient de lavage (3) présentant une chambre de lavage (4) qui sert à recevoir la vaisselle (5), et un dispositif de pompe à chaleur (9) comportant un évaporateur (13) disposé à l'intérieur d'un réservoir (16) rempli d'eau,
**caractérisé**
**en ce que** le réservoir (16) est relié fluidiquement à un conduit d'amenée d'air (17) et à un conduit d'évacuation d'air (18), le conduit d'amenée d'air (17) et le conduit d'évacuation d'air (18) débouchant chacun à l'autre extrémité dans la chambre de lavage (4), de sorte que de l'air peut être transporté par le conduit d'amenée d'air (17) de la chambre de lavage (4) au réservoir (16), l'air entrant en contact direct avec l'eau stockée dans le réservoir, et étant à nouveau déplacé de là, par l'intermédiaire du conduit d'évacuation d'air (16), dans la chambre de lavage (4).

2. Lave-vaisselle selon la revendication 1, **caractérisé par** une unité de ventilation (19) intégrée dans le conduit d'amenée d'air (17) et/ou le conduit d'évacuation d'air (18).

3. Lave-vaisselle selon la revendication 1 ou 2, **caractérisé en ce que** le conduit d'amenée d'air (17) débouche dans la chambre de lavage (4) dans le sens de la hauteur (27) du lave-vaisselle (1) au-dessus de la zone de jonction du conduit d'évacuation d'air (18).

4. Lave-vaisselle selon l'une des revendications précédentes, **caractérisé en ce que** le conduit d'amenée d'air (17) débouche dans la chambre de lavage (4) le plus près possible du plafond (26) du récipient de lavage (3).

5. Lave-vaisselle selon l'une des revendications précédentes, **caractérisé en ce que** le conduit d'amenée d'air (17) et/ou le conduit d'évacuation d'air (18) sont munis d'un dispositif de fermeture (28).

6. Lave-vaisselle selon la revendication 5, **caractérisé en ce qu'**un dispositif de fermeture (28) comporte un moyen de fermeture (29) pouvant être transféré d'une position d'utilisation à une position de non-utilisation et vice versa, et un actionneur (30) coopérant avec celui-ci.

7. Lave-vaisselle selon la revendication 6, **caractérisé en ce que** l'actionneur (30) est relié à une unité de commande (31) par des moyens de communication.

8. Lave-vaisselle selon l'une des revendications précédentes, **caractérisé en ce que** le réservoir (16) de transfert d'eau dans le récipient de lavage (3) est relié fluidiquement à la chambre de lavage (4).

9. Lave-vaisselle selon l'une des revendications précédentes, **caractérisé en ce que** la surface (25) formée par le contenu du réservoir (16) est formée de manière à être accessible à l'air entrant dans le réservoir (16).

10. Procédé de fonctionnement d'un lave-vaisselle (1) selon l'une des revendications précédentes, dans lequel, au début d'un séchage de la vaisselle, on fait passer de l'air de séchage dans un circuit d'air de circulation à travers le récipient de lavage (3) et le réservoir (16).

11. Procédé selon la revendication 10, **caractérisé en ce que** le fonctionnement de l'air de circulation est poursuivi à la fin d'un programme de lavage.

12. Procédé selon l'une des revendications 10 ou 11, **caractérisé en ce que** le fonctionnement de l'air de circulation est poursuivi après l'ouverture de la porte du lave-vaisselle.

13. Procédé selon l'une des revendications 10 à 12, **caractérisé en ce que** l'humidité de l'air entrant dans le réservoir (16) se condense directement sur la surface (25) formée par le contenu du réservoir (16).

14. Procédé selon la revendication précédente, **caractérisé en ce que** le condensat produit est pompé dans une arrivée d'eau ultérieure dans un programme de lavage ultérieur ou est dirigé dans le récipient de lavage (3) et/ou le réservoir (16) est partiellement vidé jusqu'à un niveau de référence.
